# FASCICULE DE BREVET EUROPEEN

(11) **EP 1 841 836 B1**
(45) Date de publication et mention de la délivrance du brevet: **04.03.2009**
(21) Numéro de dépôt: 06709149.6
(22) Date de dépôt: 23.01.2006
(51) Int. Cl.: C09K 21/12, C08L 23/06, C08L 23/12

(54) **COMPOSITION IGNIFUGEANTE**
FLAMMFESTE ZUSAMMENSETZUNG
FIRE-RETARDANT COMPOSITION

(30) Priorité: 24.01.2005 FR 0500699
(43) Date de publication de la demande: 10.10.2007
(73) Titulaire: RHODIA CHIMIE, 93306 Aubervilliers Cedex (FR)
(72) Inventeur: LEITE, Lorraine, 07700 Saint Marcel D'Ardeche (BE); ZANETTO, Jean-Emile, F-75009 Paris (FR)
(74) Mandataire: Seugnet, Jean Louis
(86) Numéro de dépôt international: PCT/FR2006/000147
(87) Numéro de publication internationale: WO 2006/077336

(56) Documents cités:
- WO-A-03/049812
- US-A- 4 226 907
- US-A1- 2004 039 085
- US-A1- 2004 242 738
- PATENT ABSTRACTS OF JAPAN vol. 2003, no. 12, 5 décembre 2003 (2003-12-05) & JP 2004 238378 A (NIPPON CHEM IND CO LTD), 26 août 2004 (2004-08-26)

## Description

La présente invention concerne une composition ignifugeante notamment pour ignifuger des matières synthétiques telles que les polyoléfines, comme le polypropylène, le polyéthylène ainsi que des copolymères tels que le polyéthylène vinyle acétate (EVA), par exemple.

Elle concerne plus particulièrement une composition ignifugeante à base de composé organophosphoré et présentant un effet d'intumescence.

Dans de nombreuses applications, il est nécessaire de modifier les propriétés des matières synthétiques pour leur permettre de résister au feu. Par résistance au feu, on comprend une propriété permettant de limiter la propagation de la flamme pour éviter et minimiser la formation des fumées ou de gaz toxiques.

Il a été proposé d'ajouter à ces matières synthétiques divers additifs appelés ignifugeants ou retardateurs de flamme. Pour les matières synthétiques citées ci-dessus les hydroxydes de magnésium ou d'aluminium ainsi que les polybromodiphényléthers en association avec l'oxyde d'antimoine sont les plus utilisés. Pour d'autres polymères thermoplastiques tels que les polyamides, les composés contenant du phosphore ou le phosphore rouge ainsi que des polymères bromés sont souvent utilisés.

Pour certaines matières synthétiques telles que les polyoléfines, les systèmes ignifugeants comprennent également un additif provoquant l'intumescence du matériau sous l'effet d'une flamme. De tels systèmes intumescents se caractérisent par la formation, au moment de la combustion du matériau, d'une mousse à base de carbone incombustible qui ralentit la libération des gaz inflammables provenant de la combustion de la matière synthétique telle que de la polyoléfine.

Ces systèmes comprennent généralement plusieurs composants dont les principaux sont un agent de gonflement qui produit des gaz ou des vapeurs ininflammables aidant à la formation de la mousse carbonée et un agent générateur de carbone ou charbon, appelé dans le domaine technique "Char forming agent"

Ainsi, les agents de gonflement les plus utilisés sont des composés de l'azote tels que l'urée, la mélamine et ses dérivés, les sels d'amine.

Les agents générateurs de carbone ou de charbon ou "char forming agent" sont généralement des composés polyhydroxylés tels que des sucres, le triméthylolpropane, les mono ou polypentaérythritols.

Un troisième composant est utilisé en combinaison avec les composés de gonflement notamment avec les composés azotés. Ce troisième composant est un composé générateur d'acide au moment de la combustion.

De tels composés sont choisis parmi les composés à base de phosphore tels que les polyphosphates, les organophosphites, les organophosphates.

Dans certains cas, notamment quand la matière synthétique est auto génératrice de carbone lors de sa combustion, le composé "char forming agent" peut être absent du système d'ignifugation ou d'intumescence

Il a déjà été proposé des systèmes ignifugeants pour matières thermoplastiques comprenant un composé organophosphoré acide et un agent de gonflement. Ainsi, le brevet EP 6568 décrit un système comprenant un acide organophosphonique ou leurs sels associés à un composé de mélamine, dicyanamide ou guanidine. Ce système est utilisé pour ignifuger différentes matières synthétiques dont le polypropylène. Toutefois, un tel système ne permet d'obtenir qu'une classification V2 dans le test UL 94 universellement employé dans le domaine des matières synthétiques ignifugées pour caractériser la résistance à la propagation de la flamme ou à la combustion.

D1 (US 2004/242738A) vise spécifiquement un additif particulier styrène-hypophosphite et un composé azoté comme agent de gonflement. Les silices et les silicates sont cités en passant comme additifs éventuels et sans décrire ni suggérer la fonction d'agent minéral structurant.

Il existe toujours un besoin de trouver un système ignifugeant permettant d'améliorer ce classement pour, par exemple, obtenir un classement V0.

Un des buts de la présente invention est de proposer un système ignifugeant et intumescent notamment utilisable avec les polyoléfines pour obtenir un classement du matériau ignifugé selon le test UL-94 amélioré par rapport aux matériaux connus ainsi qu'un indice de concentration limite en oxygène pour obtenir une combustion, appelé LOI (lowest oxygen index), plus grand.

A cet effet, l'invention propose une composition ignifugeante, intumescente pour matière synthétique comprenant, au moins un composé organophosphoré comportant au moins une liaison covalente carbone / phosphore et au moins une fonction acide liée à l'atome de phosphore choisi dans le groupe comprenant les acides alkylphosphoniques, les acides aminoalkylphosphoniques, les acides carboxyalkylphosphoniques, au moins un composé contenant au moins un atome d'azote choisi dans le groupe comprenant la mélamine et ses dérivés, la guanidine et les cyanamides, et les mélanges de ceux-ci, et au moins un agent structurant minéral ne se décomposant pas lors de la combustion du matériau. Cet agent structurant minéral est choisi les silices et les silicates.

Selon une autre caractéristique de l'invention, le composé organophosphoré correspond aux formules générales I et II dessous : 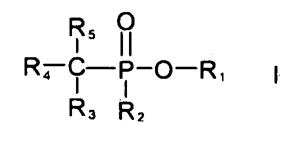 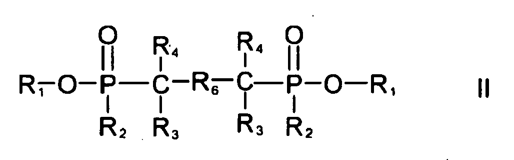 dans lesquelles :
R₁ représente l'hydrogène,
R₂ représente un groupe OH,
R₃, R₄, R₅ identiques ou différents représentent l'atome d'hydrogène, un groupe alkyle comprenant de 1 à 6 atomes de carbone, un groupe de formule R₇-NH₂ dans laquelle R₇ représente un groupe alkyle comprenant de 1 à 6 atomes de carbone
R6 représente une liaison covalente ou un radical alkyle divalent comprenant de 1 à 10 atomes de carbone.

Selon une caractéristique préférée de l'invention, les composés organophosphorés sont choisis dans le groupe comprenant les acides alkylphosphoniques, les acides aminoalkylphosphoniques, les acides carboxyalkylphosphoniques.

Dans un mode de réalisation préféré de l'invention, les composés organophosphorés sont choisis dans le groupe comprenant l'acide carboxyéthylphosphonique, l'acide aminométhylphosphonique, l'acide carboxyméthylphosphonique.

Selon l'invention, la composition ignifugeante comprend au moins un composé organique contenant au moins un atome d'azote. Ce composé est avantageusement choisi parmi les composés appartenant à la famille des mélamines, des guanidines et/ou des dicyanamides.

Avantageusement, la mélamine et ses dérivés sont préférés. On peut ainsi citer, à titre d'exemple, la mélamine, le cyanurate de mélamine, le phosphate de mélamine, le diphosphate de mélamine, le pyrophosphate de mélamine, le melem, le mélam et les mélanges de ces composés. De manière particulièrement préférée, la mélamine est utilisée.

La composition de l'invention comprend également un composé structurant minéral solide choisi parmi les silices et les silicates.

Comme silices convenables, on peut citer les silices obtenues par pyrogénation, les gels de silice et les silices obtenues par précipitation.

Les concentrations de ces différents composés dans la composition ignifugeante ne sont pas critiques et peuvent varier dans de larges proportions.

Les domaines préférés de concentration de ces différents composés, exprimée en % poids par rapport au poids de composition ignifugeante ou de la totalité des composants constituant le système ignifugeant son indiqués ci-dessous :
Composé Organophosphoré : 60-85%
Composé avec atome d'azote (Mélamine) : 10-25%
Agent structurant minéral : 1-15%

Dans un mode de réalisation particulier de l'invention, la composition ignifugeante peut comprendre un composé générateur de carbone ou charbon ("char forming agent"), comme indiqué précédemment. Ce composé est préférentiellement choisi dans le groupe comprenant les alcools polyhydroxylés, les carboxhydrates, les sucres, les amidons, de formule (C₆H₁₀O₅)m, le polyéthylène glycol, les polymères polyhydroxylés.

Encore plus préférentiellement, le composé générateur de charbon est choisi dans le groupe comprenant le mono, di- et tripentaérythritol, l'éthylène glycol, le propylène glycol, les copolymères éthylène/alcool vinylique.

Un tel composé est présent dans la composition ignifugeante à une concentration pondérale de 1 à 35% par rapport au poids de composition ignifugeant.

Ces composés peuvent être mélangés préalablement à leur addition dans une matière polymérique à ignifuger.

Toutefois, sans sortir du cadre de l'invention, ces différents composés peuvent être ajoutés de manière séparée ou en association avec un ou plusieurs autres composés dans la matière polymérique.

Un autre objet de l'invention consiste en un matériau ignifugé comprenant une matrice en matière synthétique et un système ignifugeant constitué par une composition ignifugeante et intumescente telle que décrite ci-dessus mélangée directement à la matrice ou obtenue par addition de ses différents composants dans la matrice.

Comme matière synthétique formant la matrice du matériau, l'invention s'applique plus particulièrement aux polyoléfines telles que les polypropylènes, polyéthylènes et aux copolymères tels que le polyéthylène vinyle acétate.

La concentration pondérale en composition ignifugeante dans le matériau ignifugé est avantageusement comprise entre 10 et 40%, de préférence 20 et 35%, par rapport au poids total de composition.

Ainsi, les concentrations pondérales des différents composés formant le système ignifugeant dans le matériau ignifugé sont avantageusement comprises dans les domaines suivants :
• 10% à 30% pour le composé organophosphoré
• 1% à 10% pour le composé azoté
• 0,1% à 5% pour le composé oxydé du silicium

Le matériau ignifugé de l'invention peut comprendre d'autres additifs tels que des charges de renfort, des charges de remplissage, des colorants, pigments, des additifs de stabilisation contre l'oxydation, des additifs améliorant les propriétés de résistance du matériau par rapport à la chaleur, à l'humidité, à la lumière et/ou aux UV.

Il peut également comprendre des additifs pour améliorer la processabilité du matériau tels que des additifs d'aide au démoulage, des lubrifiants, par exemple.

Les matériaux de l'invention sont notamment utilisés pour la fabrication d'articles par différents procédés de mise en forme tels que par exemple les procédés de moulage par injection, extrusion, pultrusion, injection-soufflage ou analogue.

Les matériaux conformes à l'invention sont fabriqués selon les procédés classiques de fabrication de composition à base de matière synthétique chargée. Ainsi, la composition ignifugeante peut être ajoutée dans le polymère fondu, le mélange étant mis en oeuvre avantageusement dans un dispositif comprenant une ou plusieurs vis sans fin. Dans ce procédé, la composition ignifugeante peut être ajoutée telle quelle ou sous forme de solution concentrée ou "mélange maître". Elle peut également être ajoutée par addition séparée des différents composés dans la polyoléfine fondue.

Le matériau ainsi additivé est avantageusement mis en forme dans une extrudeuse ou tout autre moyen pour former des granulés de forme cylindrique ou sphérique, appelés poudre à mouler. Ces granulés sont alimentés dans les procédés de fabrication d'articles après éventuellement séchage ou tout autre traitement connu de l'homme du métier.

Les propriétés d'ignifugation de ces matériaux sont illustrées par différentes mesures. Une des plus courantes est le test appelé UL 94 qui consiste, brièvement, pour des éprouvettes de différentes épaisseurs, à déterminer le temps d'auto-extinction d'une flamme. Ce test est normalisé sous la référence ISO 1210 :1992 (F).

Il est également intéressant de déterminer la concentration minimale limite en oxygène, appelé également LOI (Limiting Oxygene Index) nécessaire pour entretenir la flamme. Cet Index est déterminé selon la norme ISO 4589-2

D'autres avantages et détails de l'invention apparaîtront plus clairement au vu des exemples donnés uniquement à titre d'illustration, sans caractère limitatif.

Dans les exemples et formulations donnés ci-dessous, l'acide 2-carboxyéthyle phosphonique et les types de silice mentionnés sont commercialisés par la société Rhodia, la mélamine est commercialisée par la société DSM.. L'hydroxyde d'aluminium est commercialisé par la société Albermarle sous la référence Martifin OL 107.

Le polypropylène est un grade PPH6040 commercialisé par la société Total, ainsi que le polyéthylène-acétate de vinyle (Evatane 1020). Le polyéthylène haute densité est commercialisé par la société Sabic.

### Exemple 1 : composition ignifugeante A

La composition intumescente ou ignifugeante A comprend 80% en masse d'acide 2-carboxyéthyle phosphonique comme source d'acide, et 20% en masse de 2,4,6-triamino-1,3,5-triazine (mélamine) comme agent de gonflement. Ces éléments sont mélangés de manière intime dans un mélangeur rapide à pales de type mixer pour obtenir une poudre.

### Exemple 2 : composition ignifugeante B

La composition intumescente ou ignifugeante B comprend respectivement 73% en poids d'acide 2-carboxyéthyle phosphonique comme source d'acide et agent charbonnant, 18% en poids de 2,4,6-triamino-1,3,5-triazine (mélanine) comme agent de gonflement, et 9% en masse de silice comme agent structurant. Ces éléments sont mélangés de manière intime à l'aide d'un mélangeur rapide à pales, de type mixer pour obtenir une poudre.

### Exemples 3 à 5

Trois compositions sont préparées selon les modes opératoires suivants :
• Composition C (comparatif)
   Le polypropylène seul est malaxé pendant 3 minutes à 200 tr/min dans un malaxeur interne Haake de 300 cm³ chauffé à 155°C, et on poursuit le malaxage pendant 3 minutes après la fusion, sans ajout d'additif.
• Composition C1 (comparatif)
   Le polypropylène seul est malaxé pendant 3 minutes à 200 tr/min dans un malaxeur interne Haake de 300 cm³ chauffé à 155°C.
   On introduit successivement dans le malaxeur l'acide 2-carboxyéthyle phosphonique et la mélamine, selon les proportions permettant d'obtenir une fraction globale du système ignifugeant par rapport au poids total du mélange égale à 30% massique, soit 24% en poids l'acide 2-carboxyéthyle phosphonique et 6% en poids de mélamine.
   Après incorporation, on poursuit le malaxage pendant 3 minutes.
• Composition C2
   Le polypropylène seul est malaxé pendant 3 minutes à 200 tr/min à 155°C. On introduit successivement dans le malaxeur l'acide 2-carboxyéthyle phosphonique, la mélamine, et une silice commercialisée sous le nom de Tixosil 38X par Rhodia, selon les proportions permettant d'obtenir une fraction globale du système ignifugeant par rapport au poids total du mélange égale à 33% massique, soit 24% en poids d'acide 2-carboxyéthyle phosphonique, 6% en poids de mélamine et 3% en poids de silice T38X. Après incorporation, on poursuit le malaxage pendant 3 minutes.

On procède ensuite à une thermocompression des trois compositions obtenues avec un moule adapté sur une presse à plateaux Schwabenthan, à une température de 190°C, sous une pression de 1 bar pendant 4 minutes, puis de 100 bars pendant 1 minute et de 200 bars pendant 1 minute ; on refroidit ensuite pendant 4 minutes en maintenant cette pression de 200 bars.

On obtient ainsi par thermocompression, des barreaux pour les tests de comportement au feu de type UL94V (épaisseur 1.6 mm) et des barreaux pour test LOI décrit ci-dessous.

Le comportement au feu des échantillons obtenus est testé en suivant :
- le test UL-94 selon la procédure des « Underwriters Laboratories » décrite dans la norme ISO 1210 :1992 (F) Ce test est réalisé selon les cas avec des éprouvettes d'épaisseurs de 6.4, 3.2, 1.6, 0.8 et 0.4 mm.
- l'indice limite d'oxygène LOI, selon la procédure décrite dans la norme ISO 4589-2 représente la concentration volumique minimale d'oxygène, dans un mélange oxygène azote, nécessaire au maintien de la combustion d'une éprouvette. Plus ce taux est élevé, meilleure est la protection face à la combustion.

Ces tests sont conduits sur les échantillons de polypropylène C, C1 et C2, ci-dessus mises en forme pour obtenir des éprouvettes d'épaisseurs 1.6 mm pour les tests UL94, et d'épaisseur 4 mm pour la mesure du L01.
Les résultats de ces tests sont donnés dans le tableau I ci-dessous en suivant les critères de classification définis par les normes mentionnées précédemment.

**Tableau I**

| **Compositions** | **L.O.I. (%)** | **Classement UL94V (1.6mm)** |
|---|---|---|
| C | 18 | NC (non classé) |
| C1 | 34 | V2 |
| C2 | 38.5 | V0 |

Ces essais montrent que la formulation obtenue selon l'exemple C2 confère au polypropylène de très bonnes propriétés ignifugeantes. On obtient en effet un classement UL94 V0 pour une épaisseur de 1.6 mm, et l'indice limite d'oxygène passe de 18% pour le Pomypropylène sans additif à 38,5% pour le matériau ignifugé conformément à l'invention.

### Exemples 6 à 11

### • Composition D (Comparatif)

Un mélange 80/20 en poids de PEHD / EVA Polyethylène haute densité/copolymère éthylène acétate de vinyle est malaxé à 200 tr/min dans un malaxeur interne Haake de 300 cm³ chauffé à 155°C, jusqu'à fusion des polymères, et on poursuit le malaxage pendant 3 minutes après la fusion, sans ajout d'additif.

### • Composition D1 (Comparatif)

Le mélange 80/20 en masse de PEHD / EVA identique à la composition D est malaxé à 200 tr/min dans un malaxeur interne Haake de 300 cm³ chauffé à 155°C, jusqu'à fusion des polymères. On introduit ensuite dans le malaxeur 61% en poids d'hydroxyde d'aluminium, additif retardateur de flamme couramment utilisé dans les polyoléfines. On poursuit le malaxage pendant 3 minutes après incorporation.

### • Composition D2 (Comparatif)

Le mélange 80/20 en masse de PEHD / EVA identique à la composition D est malaxé à 200 tr/min dans un malaxeur interne Haake de 300 cm³ chauffé à 155°C, jusqu'à fusion des polymères. On introduit dans le malaxeur la poudre formulée A de l'exemple 1. La fraction globale d'ignifugeant par rapport au poids total du mélange est égale à 30% massique, soit 24% en poids l'acide 2-carboxyéthyle phosphonique et 6% en poids de mélamine. Après incorporation, on poursuit le malaxage pendant 3 minutes.

### • Composition D3

Le mélange massique 80/20 de PEHD/EVA identique à l'exemple D est malaxé à 200 tr/min dans un malaxeur interne Haake de 300 cm3 chauffé à 155°C, jusqu'à fusion des polymères. On introduit dans le malaxeur la poudre formulée de l'exemple 2 obtenue avec comme silice, une silice commercialisée par la société Rhodia sous le nom Tixosil 38X. La fraction globale d'ignifugeant par rapport au poids total du mélange est égale à 33% massique, soit 24% en poids l'acide 2-carboxyéthyle phosphonique, 6% en poids de mélamine et 3% en poids de silice T38X. Après incorporation, on poursuit le malaxage pendant 3 minutes.

### • Compositions D4

Le mélange massique 80/20 de PEHD/EVA identique à l'exemple D est malaxé à 200 tr/min dans un malaxeur interne Haake de 300 cm³ chauffé à 155°C, jusqu'à fusion des polymères. On introduit dans le malaxeur une poudre formulée, conforme à l'exemple 2 obtenue avec une silice commercialisée par la société Rhodia sous le nom de Siloa 72X. La fraction globale d'ignifugeant par rapport au poids total du mélange est égale à 33% massique, soit 24% en poids l'acide 2-carboxyéthyle phosphonique, 6% en poids de mélamine et 3% en poids de silice Siloa 72X. Après incorporation, on poursuit le malaxage pendant 3 minutes.

On procède ensuite à une thermocompression des compositions ci-dessus sur une presse à plateaux Schwabenthan, à une température de 190°C, sous une pression de 1 bar pendant 4 minutes, puis de 100 bars pendant 1 minute et de 200 bars pendant 1 minute ; on refroidit ensuite pendant 4 minutes en maintenant cette pression de 200 bars.

On obtient ainsi par thermocompression, des éprouvettes conformes et convenables pour la mise en oeuvre des tests de comportement au feu de type UL94V (épaisseur 1.6 mm) pour la détermination du LOI.

Les propriétés de comportement au feu de ces compositions sont déterminées selon les tests et procédures décrits précédemment.
Les résultats obtenus sont rassemblés dans le tableau II ci-dessous

| **Composition** | **L.O.I. (%)** | **Classement UL94V (1.6mm)** |
|---|---|---|
| D | 18.5 | NC (non classé) |
| D1 | 30.5 | NC |
| D2 | 29.5 | V2 |
| D3 | 33.5 | V2 |
| D4 | 37 | V2 |

## Revendications

1. Composition ignifugeante et intumescente pour matières synthétiques **caractérisée en ce qu'**elle comprend au moins un composé organophosphoré comprenant au moins une liaison covalente phosphore/carbone et au moins une fonction acide liée à l'atome de phosphore choisi dans le groupe comprenant les acides alkylphosphoniques, les acides aminoalkylphosphoniques, les acides carboxyalkylphosphoniques, au moins un composé contenant au moins un atome d'azote choisi dans le groupe comprenant la mélamine et ses dérivés, la guanidine et les cyanamides, et les mélanges de ceux-ci, et au moins un composé structurant minéral choisi parmi les silices et les silicates.

2. Composition selon la revendication 1, **caractérisée en ce qu'**elle comprend un composé générateur de charbon.

3. Composition selon la revendication 1 ou 2, **caractérisée en ce que** le composé organophosphoré est choisi parmi les composés répondant aux formules générales 1 et II suivantes : 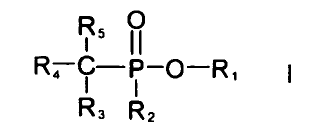 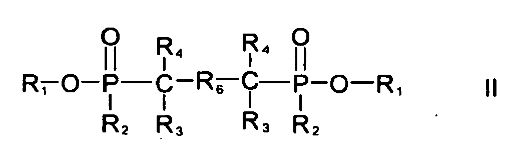 dans lesquelles :
R₁ représente l'hydrogène,
R₂ représente un groupe OH,
R₃, R₄, R₅ identiques ou différents représentent l'atome d'hydrogène, un groupe alkyle comprenant de 1 à 6 atomes de carbone, un groupe de formule R₇-NH₂ dans laquelle R₇ représente un groupe alkyle comprenant de 1 à 6 atomes de carbone,
R6 représente une liaison covalente ou un radical alkyle divalent comprenant de 1 à 10 atomes de carbone.

4. Composition selon l'une quelconque des revendication précédentes, **caractérisée en ce que** le composé organophosphoré est choisi dans le groupe comprenant l'acide carboxyéthylphosphonique, l'acide aminométhylphosphonique, l'acide carboxyméthylphosphonique.

5. Composition selon l'une des revendications 1 à 4, **caractérisé en ce que** le composé comprenant un atome d'azote est choisi dans le groupe comprenant la mélamine, le cyanurate de mélamine, le phosphate de mélamine, le diphosphate de mélamine, le pyrophosphate de mélamine, le melem, le mélam et les mélanges de ces composés.

6. Composition selon l'une quelconque des revendication précédentes, **caractérisée en ce que** la composition pondérale de la composition ignifugeante est :
- Composé Organophosphoré : 60-85%
- Composé avec atome d'azote (Mélamine) : 10-25%
- Agent structurant minéral : 1-15%

7. Composition selon l'une des revendications 2 à 6, **caractérisé en ce que** le composé générateur de charbon est choisi dans le groupe comprenant, les alcools polyhydroxylés, les carboxhydrates, les sucres, les amidons, de formule (C₆H₁₀O₅)m, le polyéthylène glycol, les polymères polyhydroxylés.

8. Composition selon la revendication 7, **caractérisé en ce que** le composé générateur de charbon est choisi dans le groupe comprenant le mono, di- et tripentaérythritol, l'éthylène glycol, le propylène glycol, les copolymères éthylène/alcool vinylique.

9. Composition selon l'une quelconque des revendications précédente, **caractérisée en ce que** les silices sont choisies parmi les silices obtenues par pyrogénation, les gels de silice et les silices obtenues par précipitation.

10. Matériau ignifugé **caractérisé en ce qu'**il comprend une matrice en matière synthétique et une composition ignifugeante ou intumescente selon l'une des revendications 1 à 9.

11. Matériau selon la revendication 10, **caractérisé en ce que** la matière synthétique est une polyoléfine ou un copolymère.d'éthylène vinyle acétate.

12. Matériau selon la revendication 11, **caractérisé en ce que** la polyoléfine est un polypropylène ou un polyéthylène.

13. Matériau selon l'une des revendications 10 à 11, **caractérisée en ce qu'**il comprend des charges et/ou additifs.

## Claims

1. Fire-retardant and intumescent composition for plastics **characterized in that** it comprises at least one organophosphorus compound comprising at least one phosphorus-carbon covalent bond and at least one acid functional group linked to the phosphorus atom, and that is chosen from the group comprising alkylphosphonic acids, aminoalkylphosphonic acids and carboxyalkylphosphonic acids, at least one compound containing at least one nitrogen atom chosen from the group comprising melamine and its derivatives, guanidine and cyanamides, and mixtures thereof, and at least one mineral structuring compound chosen from silicas and silicates.

2. Composition according to Claim 1, **characterized in that** it comprises a char-forming compound.

3. Composition according to Claim 1 or 2, **characterized in that** the organophosphorus compound is chosen from the compounds corresponding to the general formulae I and II below: 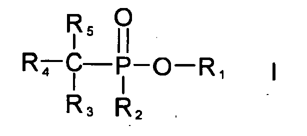 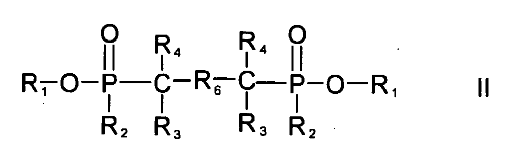 in which:
R₁ represents hydrogen;
R₂ represents an OH group;
R₃, R₄, R₅, which are identical or different, represent a hydrogen atom, an alkyl group comprising from 1 to 6 carbon atoms or a group of formula R₇-NH₂ in which R₇ represents an alkyl group comprising from 1 to 6 carbon atoms;
R₆ represents a covalent bond or a divalent alkyl radical comprising from 1 to 10 carbon atoms.

4. Composition according to any one of the preceding claims, **characterized in that** the organophosphorus compound is chosen from the group comprising carboxyethylphosphonic acid, (aminomethyl)phosphonic acid, or carboxymethylphosphonic acid.

5. Composition according to one of Claims 1 to 4, **characterized in that** the compound comprising a nitrogen atom is chosen from the group comprising melamine, melamine cyanurate, melamine phosphate, melamine diphosphate, melamine pyrophosphate, melem, melam and mixtures of these compounds.

6. Composition according to any one of the preceding claims, **characterized in that** the weight composition of the fire-retardant composition is:
- organophosphorus compound: 60-85 %
- compound with nitrogen atom (melamine): 10-25 %
- mineral structuring agent: 1-15 %

7. Composition according to one of Claims 2 to 6, **characterized in that** the char-forming compound is chosen from the group comprising polyhydroxylated alcohols, carbohydrates, sugars, starches, of formula (C₆H₁₀O₅)m, polyethylene glycol and polyhydroxylated polymers.

8. Composition according to Claim 7, **characterized in that** the char-forming agent is chosen from the group comprising mono-, di- and tripentaerythritol, ethylene glycol, propylene glycol and ethylene/vinyl alcohol copolymers.

9. Composition according to any one of the preceding claims, **characterized in that** the silicas are chosen from silicas obtained by pyrogenation, silica gels and silicas obtained by precipitation.

10. Fireproofed material **characterized in that** it comprises a matrix made of a plastic and a fire-retardant or intumescent composition according to one of Claims 1 to 9.

11. Material according to Claim 10, **characterized in that** the plastic is a polyolefin or an ethylene/vinyl acetate copolymer.

12. Material according to Claim 11, **characterized in that** the polyolefin is a polypropylene or a polyethylene.

13. Material according to either of Claims 10 and 11, **characterized in that** it comprises fillers and/or additives.

## Patentansprüche

1. Flammhemmende und intumeszierende Zusammensetzung für Kunststoffe, **dadurch gekennzeichnet, daß** sie mindestens eine Organophosphorverbindung mit mindestens einer kovalenten Phosphor-Kohlenstoff-Bindung und mindestens einer an das Phosphoratom gebundenen Säurefunktion aus der Gruppe enthaltend Alkylphosphonsäuren, Aminoalkylphosphonsäuren und Carboxyalkylphosphonsäuren, mindestens eine Verbindung mit mindestens einem Stickstoffatom aus der Gruppe enthaltend Melamin und Derivate davon, Guanidin und Cyanamide und Mischungen davon und mindestens eine unter Kieselsäuren und Silikaten ausgewählte anorganische strukturgebende Verbindung enthält.

2. Zusammensetzung nach Anspruch 1, **dadurch gekennzeichnet, daß** sie eine Kohlebildnerverbindung enthält.

3. Zusammensetzung nach Anspruch 1 oder 2, **dadurch gekennzeichnet, daß** die Organophosphorverbindung unter den Verbindungen der folgenden allgemeinen Formeln I und II ausgewählt ist: 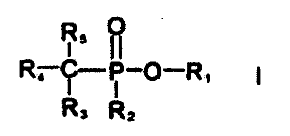 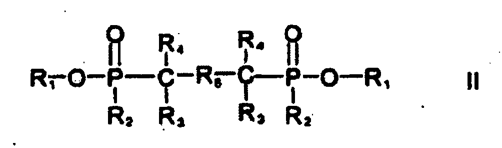 worin:
R₁ für Wasserstoff steht,
R₂ für eine OH-Gruppe steht,
R₃, R₄ und R₅ gleich oder verschieden sind und für ein Wasserstoffatom, eine Alkylgruppe mit 1 bis 6 Kohlenstoffatomen oder eine Gruppe der Formel R₇-NH₂, worin R₇ für eine Alkylgruppe mit 1 bis 6 Kohlenstoffatomen steht, stehen und
R₆ für eine kovalente Bindung oder einen zweiwertigen Alkylrest mit 1 bis 10 Kohlenstoffatomen steht.

4. Zusammensetzung nach einem der vorhergehenden Ansprüche, **dadurch gekennzeichnet, daß** die Organophosphorverbindung aus der Gruppe enthaltend Carboxyethylphosphonsäure, Aminomethylphosphonsäure und Carboxymethylphosphonsäure ausgewählt ist.

5. Zusammensetzung nach einem der Ansprüche 1 bis 4, **dadurch gekennzeichnet, daß** die Verbindung mit einem Stickstoffatom aus der Gruppe enthaltend Melamin, Melamincyanurat, Melaminphosphat, Melamindiphosphat, Melaminpyrophosphat, Melem, Melam und Mischungen dieser Verbindungen ausgewählt ist.

6. Zusammensetzung nach einem der vorhergehenden Ansprüche, **dadurch gekennzeichnet, daß** die Gewichtszusammensetzung der flammhemmenden Zusammensetzung die folgende ist:
- Organophosphorverbindung: 60-85%
- Verbindung mit Stickstoffatom (Melamin): 10-25%
- anorganische strukturgebende Verbindung: 1-15%.

7. Zusammensetzung nach einem der Ansprüche 2 bis 6, **dadurch gekennzeichnet, daß** die Kohlebildnerverbindung aus der Gruppe enthaltend Polyhydroxyalkohole, Kohlenhydrate, Zucker, Stärken der Formel (C₆H₁₀O₅)m, Polyethylenglykol und Polyhydroxypolymere ausgewählt ist.

8. Zusammensetzung nach Anspruch 7, **dadurch gekennzeichnet, daß** die Kohlebildnerverbindung aus der Gruppe enthaltend Mono-, Di- und Tripentaerythrit, Ethylenglykol, Propylenglykol und Ethylen/Vinylalkohol-Copolymeren ausgewählt ist.

9. Zusammensetzung nach einem der vorhergehenden Ansprüche, **dadurch gekennzeichnet, daß** die Kieselsäuren unter pyrogen hergestellten Kieselsäuren, Kieselgelen und Fällungskieselsäuren ausgewählt sind.

10. Flammfestes Material, **dadurch gekennzeichnet, daß** es eine Kunststoffmatrix und eine flammhemmende oder intumeszierende Zusammensetzung nach einem der Ansprüche 1 bis 9 enthält.

11. Material nach Anspruch 10, **dadurch gekennzeichnet, daß** es sich bei dem Kunststoff um ein Polyolefin oder ein Ethylen-Vinylacetat-Copolymer handelt.

12. Material nach Anspruch 11, **dadurch gekennzeichnet, daß** es sich bei dem Polyolefin um Polypropylen oder Polyethylen handelt.

13. Material nach einem der Ansprüche 10 bis 11, **dadurch gekennzeichnet, daß** es Füllstoffe und/oder Additive enthält.
